# EUROPÄISCHE PATENTSCHRIFT

(11) **EP 2 362 553 B1**
(45) Veröffentlichungstag und Bekanntmachung des Hinweises auf die Patenterteilung: **09.05.2012**
(21) Anmeldenummer: 10196913.7
(22) Anmeldetag: 23.12.2010
(51) Int. Cl.: H04B 1/715, G06K 7/00, H04W 16/14

(54) **Verfahren zur Bestimmung eines Sendekanales für ein RFID-System**
Method for determining a transmission channel for an RFID system
Procédé de détermination d'un canal d'émission pour un système RFID

(30) Priorität: 22.02.2010 DE 102010000512
(43) Veröffentlichungstag der Anmeldung: 31.08.2011
(73) Patentinhaber: Feig Electronic GmbH, 35781 Weilburg (DE)
(72) Erfinder: Desch, Markus, 65527, Niedernhausen (DE)
(74) Vertreter: Knefel, Cordula

(56) Entgegenhaltungen:
- EP-A1- 1 619 601
- WO-A1-2007/055037
- WO-A1-2009/106672

## Beschreibung

Die Erfindung betrifft ein Verfahren zur Bestimmung eines Sendekanales für ein RFID-System mit wenigstens einem Kanal zur Kommunikation zwischen einer RFID-Schreib-/Lesestation und wenigstens einem Transponder.

Insbesondere betrifft die Erfindung ein Verfahren für den Betrieb einer RFID-Schreib-/Lesestation, die in einem Frequenzband mit mehreren Sendekanälen in Koexistenz mit einem anderen Funksystem arbeiten kann und dabei in der Lage ist zu unterscheiden, ob bereits eine weitere RFID-Schreib-/Lesestation einen Sendekanal belegt hat und welche Kanäle durch ein anderes Funksystem belegt sind.

Ein RFID-System besteht gemäß dem Stand der Technik aus einer RFID-Schreib-/Lesestation, an die eine RFID-Antenne angeschlossen ist, und mindestens einem Transponder. Die RFID-Antenne kann dabei auch eine bauliche Einheit mit der RFID-Schreib-/Lesestation bilden und dient dazu, Sendesignale und Energie zu emittieren und Antwortsignale zu empfangen.

Eine RFID-Schreib-/Lesestation weist üblicherweise eine Sendevorrichtung auf, über die sie eine Trägerfrequenz in einem definierten Frequenzband erzeugen kann und über die sie in der Lage ist, kodierte Daten zu senden, indem die Trägerfrequenz mit einer definierten Kodierung moduliert wird. Die Trägerfrequenz dient gleichzeitig dazu, die passiven Transponder, die in das Lesefeld der RFID-Schreib-/Lesestation gelangen, mit elektrischer Energie zu versorgen. Für die Modulation der Trägerfrequenz ist eine Vielzahl unterschiedlicher Verfahren, wie beispielsweise Amplitude Shift Keying (ASK), Phase-Reversed Amplitude Shift Keying (PR-ASK), Frequency Shift Keying (FSK), Phase Shift Keying (PSK) bekannt. Auch die Kodierung der Daten kann in unterschiedlicher Art wie beispielsweise NRZ-Code, Manchester-Code, Miller-Code oder Differential biphase Code erfolgen. Ferner weist eine RFID-Schreib-/Lesestation eine Empfangsvorrichtung auf, über die sie aus den Empfangssignalen Antwortdaten eines Transponders demodulierten kann. Die Empfangsvorrichtung einer RFID-Schreib-/Lesestation kann abhängig von dem Frequenzbereich und den Anforderungen an das RFID-System sehr unterschiedlich ausgeführt sein. Es werden beispielsweise einfache Dioden-Demodulatoren oder komplexe Quadratur-Empfänger eingesetzt. Ferner weist eine RFID-Schreib-/Lesestation nach dem Stand der Technik eine Steuer- und Auswerteeinheit auf, in der die zu sendenden Daten für die Kodierung aufbereitet werden und die empfangenen Daten dekodiert und ausgewertet werden können.

Passive Transponder bestehen gemäß dem Stand der Technik aus einem integrierten Mikroelektronikbauelement (IC) und einer Antenne. Gelangt ein Transponder in den Erfassungsbereich der RFID-Antenne, so wird der Transponder mit elektrischer Energie zum Betrieb der integrierten Schaltung (IC) versorgt und kann Daten empfangen und Daten an die RFID-Antenne zurücksenden.

Ein RFID-System stellt dabei im Prinzip eine besondere Art eines Funksystems dar und unterscheidet sich von den meisten anderen Funksystemen dadurch, dass es über seine Trägerfrequenz die Transponder in seinem Erfassungsbereich mit elektrischer Energie versorgt.

Für Funksysteme nach dem Stand der Technik sind Frequenzbänder definiert, welche durch eine untere und eine obere Frequenz bestimmt sind. Um den Parallelbetrieb mehrerer gleichartiger Funksysteme zu ermöglichen, wird ein Frequenzband in eine Mehrzahl von Kanälen unterteilt, wobei jeder Kanal wiederum durch eine untere Grenzfrequenz f1 und eine obere Grenzfrequenz f2 definiert ist. Wird ein Sender auf einen so definierten Kanal eingestellt, so bedeutet dies, dass seine Sendefrequenz in einem Bereich nahe der Mitte zwischen den Kanalgrenzen f1 und f2 des Kanales eingestellt wird, in dem er arbeiten soll. Diese Frequenz wird als Mittenfrequenz fc des Kanales bezeichnet. In den meisten Fällen ist die Mittenfrequenz auch gleichzeitig die Trägerfrequenz, die zur Informationsübertragung moduliert wird.

Ein Sender emittiert allerdings nicht nur die diskrete Mittenfrequenz, sondern ein Frequenzspektrum, bei dem die Pegel der emittierten Frequenzen, die unterhalb und oberhalb der Mittenfrequenz liegen, einen geringeren Wert als die Mittenfrequenz aufweisen. An den Kanalgrenzen f1 und f2 weist das emittierte Frequenzspektrum in der Regel nur noch einen sehr geringen Pegel im vergleich zur Mittenfrequenz auf.

Das Frequenzspektrum eines Senders hängt dabei beispielsweise ab vom verwendeten Modulationsverfahren, der Kodierung und der Datenübertragungsrate, also der Datenmenge, die in einer definierten Zeit übertragen werden kann. Dadurch unterscheiden sich die Sendespektren unterschiedlicher Funksysteme teilweise sehr deutlich und weisen Frequenzen oberhalb und unterhalb der Mittenfrequenz, die so genannten Seitenbänder auf.

Bei den meisten üblichen Funksystemen geht man davon aus, dass räumlich benachbarte Sender nicht auf demselben Kanal operieren können, sondern jeweils einen eigenen Kanal verwenden müssen, damit sich die Sendesignale der räumlich benachbarten Sender nicht überlagern und stören.

Damit der parallele Betrieb unterschiedlichster Funksysteme flächendeckend möglich ist, werden von nationalen oder internationalen Stellen Band- und Kanalpläne bestimmt, in denen definiert ist, welche Art von Funksystemen mit welcher Leistung (Pegel) in einem bestimmten Frequenzband betrieben werden dürfen und in welche Kanäle die einzelnen Frequenzbänder dabei unterteilt werden.

Bei RFID-Systemen nach dem Stand der Technik ist es möglich, dass mehrere RFID-Schreib-/Lesestationen denselben Kanal zum Senden von Daten und Energie zum Transponder (Sendekanal) nutzen können, ohne die Kommunikation der räumlich benachbarten RFID-Schreib-/Lesestationen zu behindern oder zu stören. Diese Betriebsart ist unter dem Begriff "Dense Reader Mode" bekannt.

Die heute üblichen RFID-Systeme dürfen einen Sendekanal nur belegen, wenn dieser Sendekanal exklusiv für die Nutzung von RFID-Systemen bestimmt und freigegeben ist. Dies hat den Nachteil, dass das gesamte Frequenzspektrum sehr restriktiv einzelnen Funksystemen zugeteilt werden muss und bei der stetig steigenden Anzahl unterschiedlichster Funksysteme in absehbarer Zeit keine Frequenzbänder mehr für neue Funksysteme zur Verfügung stehen.

Andere Funkvorschriften schreiben vor, dass ein Sender nur für eine sehr kurze Dauer einen Kanal belegen darf, um dann nach dem Zufallsprinzip auf einen anderen Kanal auszuweichen (Frequency Hopping). Dieses Verfahren hat den systembedingten Nachteil, dass immer wieder unterschiedliche Funksysteme auf einem Kanal kollidieren und die Datenübertragung für eine kurze Periode gestört wird, was den Datenaustausch verzögert und somit längere Sendezeiten zur Folge hat.

Zum Stand der Technik gehören auch verfahren, bei denen ein Funksystem zunächst für eine definierte Zeitspanne prüfen muss, ob ein Sendekanal frei ist. Erst nachdem der Sendekanal für eine definierte Zeitspanne frei war, darf das Funksystem seinen Sendebetrieb für eine definierte Sendedauer auf dem Kanal starten. Dieses Verfahren ist unter dem Begriff "Listen Before Talk" bekannt und hat den Nachteil, dass jedes Funksystem einen Sendekanal nur für eine definierte Zeitspanne belegen darf und erhebliche Wartezeiten notwendig sind, bis ein Kanal als frei detektiert werden kann.

Der parallele Betrieb mehrerer RFID-Schreib-/Lesestationen auf demselben Sendekanal macht es erforderlich, dass eine RFID-Schreib-/Lesestation erkennen kann, ob ein Sendekanal bereits durch ein RFID-System oder durch ein anderes Funksystem verwendet wird, da eine RFID-Schreib-/Lesestation nur solche Sendekanäle verwenden darf, die entweder frei sind oder bereits durch eine andere RFID-Schreib-/Lesestation verwendet werden.

Zum Stand der Technik zählen in diesem Zusammenhang auch Lösungsansätze, bei denen RFID-Schreib-/Lesestationen zu Beginn oder während eines Sendevorganges ein für RFID-Schreib-/Lesestationen spezifisches Signal oder einen Code (Reader-Code) aussenden, um anderen RFID-Schreib-/Lesestationen das Vorhandensein einer RFID-Schreib-/Lesestation auf dem Kanal zu signalisieren. Dieser Lösungsansatz hat den Nachteil, dass alle RFID-Schreib-/Lesestationen den Reader-Code synchron aussenden müssen, damit der Reader-Code nicht durch Überlagerungen von mehreren asynchronen Reader-Codes derart verändert wird, dass er von einer weiteren RFID-Schreib-/Lesestation nicht mehr als Reader-Code erkannt werden kann.

Ferner sind aus dem Stand der Technik Lösungsansätze bekannt, die davon ausgehen, dass ein RFID-System oder ein anderes Funksystem ein systemtypisches Sendefrequenzspektrum erzeugt und man ein RFID-System anhand seines typischen Sendefrequenzspektrums erkennen könne. Diese Lösungsansätze haben den Nachteil, dass eine derartige genaue Analyse eines Sendefrequenzspektrums sehr aufwändig und auch fehleranfällig ist, da sich die Sendefrequenzspektren mehrerer räumlich benachbarter Funksysteme überlagern können und damit kein systemtypisches Sendefrequenzspektrum mehr erkennbar ist.

Weiterhin gehört zum Stand der Technik (WO 2007/055037 A1) ein Verfahren zum gleichzeitigen Betrieb mehrerer RFID Schreib-/Lesestationen innerhalb eines Frequenzbandes, bei dem das Frequenzband durch einen Kanalplan in eine Mehrzahl von Kanälen unterteilt ist. Dieses zum Stand der Technik gehörende Verfahren löst das Problem, wie mehrere RFID-Schreib-/Lesestationen in demselben Frequenzband betrieben werden können, ohne sich gegenseitig zu stören. Es ist jedoch nicht angegeben, wie ein RFID-Reader in ein und demselben Frequenzband mit einem anderen Funksystem betrieben werden kann.

Aufgabe der Erfindung ist es, ein Verfahren anzugeben, gemäß dem eine RFID-Schreib-/Lesestation erkennen kann, ob ein gewünschter Sendekanal bereits durch eine andere RFID-Schreib-/Lesestation oder durch ein anderes Funksystem belegt wird und welches einen störungsfreien parallelen Betrieb von RFID-Systemen mit anderen Funksystemen innerhalb eines Frequenzbandes gewährleistet.

Diese Aufgabe wird durch ein Verfahren mit den Merkmalen gemäß Anspruch 1 gelöst.

Das erfindungsgemäße Verfahren zum gleichzeitigen Betrieb mindestens eines ersten Funksystems und mindestens eines RFID-Systems innerhalb eines Frequenzbandes zeichnet sich dadurch aus, dass das Frequenzband durch mindestens zwei Kanalpläne in eine Mehrzahl von Kanälen unterteilt ist und bei dem ein erstes Funksystem einen ersten Kanalplan nutzt und ein RFID-System einen davon abweichenden zweiten Kanalplan, wobei sich die Kanäle des ersten und zweiten Kanalplanes überschneiden und die Mittenfrequenzen des zweiten Kanalplanes jeweils so definiert sind, dass sie jeweils auf einer Kanalgrenze des ersten Kanalplanes liegen und ein RFID-System die Belegt-Zustände von Kanälen des ersten Kanalplanes und/oder des zweiten Kanalplanes analysiert, um festzustellen, welche Kanäle des ersten Kanalplanes durch ein anderes Funksystem belegt sind und/oder welche Kanäle des zweiten Kanalplanes bereits durch ein anderes RFID-System belegt sind.

Der besondere Vorteil der Erfindung liegt darin, dass es durch die erfindungsgemäße Definition von zwei unterschiedlichen überlagerten Kanalplänen innerhalb eines Frequenzbandes möglich ist, ein Funksystem und ein RFID-System in demselben Frequenzband zu betreiben und ein RFID-System anhand einer einfachen Analyse eines empfangenen Frequenzspektrums feststellen kann, ob und welche Kanäle durch ein anderes Funksystem und ob und welche Kanäle durch ein weiteres RFID-System verwendet werden, die für eine gemeinsame Nutzung zur Verfügung stehen.

Dadurch, dass die beiden Kanalpläne so angelegt sind, dass die Mittenfrequenzen des zweiten Kanalplanes, also des Kanalplanes für RFID-Systeme, jeweils auf einer Kanalgrenze des ersten Kanalplanes liegen, kann ein RFID-System auf sehr schnelle und einfache Weise eine Unterscheidung zwischen einem RFID-System und einem anderen Funksystem vornehmen und hat somit die Möglichkeit, einen Kanal zu wählen, der bereits von einem anderen RFID-System verwendet wird mit dem Vorteil, dass möglichst wenige Kanäle innerhalb des Frequenzbandes durch RFID-Systeme belegt werden.

Eine RFID-Schreib-/Lesestation eines RFID-Systems führt dazu eine Analyse des empfangenen Frequenzspektrums durch und bewertet, welche Kanäle in ihrem Frequenzband durch ein weiteres RFID-System und/oder ein weiteres Funksystem belegt sind.

Dazu kann die RFID-Schreib-/Lesestation beispielsweise eine Fast-Fourier-Transformation (FFT) über das gesamte Frequenzband oder abschnittsweise über eine Gruppe von Kanälen oder nur kleine Frequenzbereiche durchführen oder die RFID-Schreib-/Lesestation analysiert sukzessive die Empfangspegel innerhalb eines schmalen Frequenzbereiches, beispielsweise innerhalb eines Kanales oder eines noch kleineren Frequenzbereiches, beispielsweise eines Viertels einer Kanalbandbreite und durchläuft dabei das gesamte Frequenzband bei der Suche nach freien und belegten Kanälen. Die minimale Breite des analysierten Frequenzbereiches wird dabei von der minimalen Bandbreite der Empfangsvorrichtung der RFID-Schreib-/Lesestation bestimmt.

Anhand der ermittelten Pegel bei bestimmten Frequenzen kann die RFID-Schreib-/Lesestation erkennen, ob ein Kanal durch ein Funksystem, welches nach einem ersten Kanalplan arbeitet, oder durch ein RFID-System, welches nach einem zweiten Kanalplan arbeitet, belegt ist, weil es Kenntnis davon hat, wo die Mittenfrequenzen der Kanäle der beiden Kanalpläne liegen.

Ermittelt eine erste RFID-Schreib-/Lesestation dabei einen Kanal innerhalb des zweiten Kanalplanes für RFID-Systeme, der bereits durch eine zweite RFID-Schreib-/Lesestation verwendet wird und gleichzeitig, dass auch die beiden Kanäle des ersten Kanalplanes, die sich mit diesem Kanal des zweiten Kanalplanes teilweise überschneiden, nicht durch ein anderes Funksystem verwendet werden, also frei sind, stellt die erste RFID-Schreib-/Lesestation ihren Sendekanal auf den Kanal ein, den die zweite RFID-Schreib-/ Lesestation bereits verwendet. Eine RFID-Schreib-/Lesestation sucht also jeweils einen Kanal auf, auf dem bereits eine andere RFID-Schreib-/Lesestation arbeitet, und überprüft, ob sich dieser Kanal nicht mit aktiven Kanälen eines weiteren Funksystems im ersten Kanalplan überschneidet.

Die erste RFID-Schreib-/Lesestation muss bei der Auswahl des eigenen Kanales prüfen, ob sie einen Kanal des zweiten Kanalplanes für RFID-Systeme findet, der bereits durch eine andere RFID-Schreib-/Lesestation verwendet wird und ob sich dieser Kanal in seiner eigenen Umgebung nicht bereits mit einem aktiven Kanal des ersten Kanalplanes überschneidet. Die Überprüfung beider Kriterien ist notwendig, da es aufgrund räumlicher Distanzen vorkommen kann, dass unterschiedliche RFID-Schreib-/Lesestationen unterschiedliche Kanäle des ersten Kanalplanes als belegt erkennen.

Dazu analysiert die RFID-Schreib-/Lesestation den Belegt-Status der Kanäle des ersten Kanalplanes und berücksichtigt den Belegt-Status dieses Kanalplanes bei der Auswahl des eigenen Kanales dahingehend, dass die RFID-Schreib-/Lesestation nur einen Sendekanal wählt, der sich nicht mit einem aktiven Sendekanal des ersten Kanalplanes überschneidet. Hierdurch wird die Gefahr einer Störung des Sendebetriebes der Funksysteme, die den ersten Kanalplan nutzen und der RFID-Systeme, die den zweiten Kanalplan nutzen, verhindert.

Diese Vorgehensweise ist aufgrund der räumlichen Anordnung von RFID-Schreib-/Lesestationen und Funksystemen notwendig, da es durchaus möglich ist, dass eine räumlich entfernte erste RFID-Schreib-/Lesestation kein anderes aktives Funksystem auf einem Kanal ermitteln kann, während eine zweite, in einem gewissen Abstand aufgestellte RFID-Schreib-/Lesestation auf demselben Kanal durchaus ein anderes Funksystem ermittelt, weil sich dieses Funksystem in seiner relativen räumlichen Umgebung befindet.

Ermittelt eine RFID-Schreib-/Lesestation hingegen keine weitere RFID-Schreib-/Lesestation und auch kein weiteres aktives Funksystem, kann sie ihren Sendekanal frei wählen.

Die Ermittlung des Belegt-Status eines Kanales, ob ein Kanal also frei oder belegt ist, kann dabei mit unterschiedlichen Verfahren oder Kombinationen aus unterschiedlichen Verfahren durchgeführt werden. Ermittelt eine RFID-Schreib-/Lesestation auf einem Kanal ein Ergebnis, welches über einem zuvor definierten Schwellwert liegt, gilt der Kanal als belegt.

Eine vorteilhafte Möglichkeit zur Ermittlung des Belegt-Status eines Kanales besteht darin, die Pegel im Bereich der Mittenfrequenz mit den Pegeln in einem definierten Abstand zur Mittenfrequenz miteinander zu vergleichen. Dieser Ansatz geht davon aus, dass das emittierte Frequenzspektrum der meisten Funksysteme und das von RFID-Systemen jeweils im Bereich der Mittenfrequenz ein Maximum aufweist und die Pegel, die oberhalb und unterhalb der Mittenfrequenz liegen, geringer sind.

Ausgehend von diesem Ansatz kann eine RFID-Schreib-/ Lesestation den Belegt-Status der Kanäle des ersten und/ oder des zweiten Kanalplanes durch einfache Messung und Vergleichen von Pegeln, die an definierten Frequenzen mit einer definierten Bandbreite gemessen werden, ermitteln. Dazu ermittelt die RFID-Schreib-/Lesestation einen Pegel im Bereich der Mittenfrequenz (fc) und vergleicht diesen mit einem Pegel bei einer anderen Messfrequenz (fm). Eine Messfrequenz (fm) kann dabei in einem bestimmten Abstand oberhalb und/oder unterhalb zur Mittenfrequenz (fc) liegen und liegt üblicherweise innerhalb des analysierten Kanales. Eine Messfrequenz (fm) kann aber auch an einer beliebigen anderen Frequenz innerhalb des Frequenzbandes liegen.

Ermittelt eine RFID-Schreib-/Lesestation für einen Kanal gemäß des ersten Kanalplanes in einem Bereich der Mittenfrequenz (fc) dieses Kanales einen sehr geringen Pegel und bei der Messfrequenz (fm) ebenfalls einen geringen Pegel, die jeweils unter einem definierten Schwellwert liegen, so ist dies ein Indiz dafür, dass dieser Kanal den Belegt-Status frei hat.

Ermittelt eine RFID-Schreib-/Lesestation für einen Kanal gemäß des ersten Kanalplanes bei einer Messfrequenz (fm) einen vergleichsweise geringeren Pegel als im Bereich der Mittenfrequenz (fc) dieses Kanales und liegt dieser Pegel über einem definierten Schwellwert, so ist dies ein Indiz dafür, dass der Kanal durch ein Funksystem des ersten Kanalplanes belegt ist.

Ermittelt eine RFID-Schreib-/Lesestation für einen Kanal gemäß des ersten Kanalplanes bei einer Messfrequenz (fm) einen vergleichsweise höheren Pegel als im Bereich der Mittenfrequenz (fc) und liegt dieser Pegel über einem zuvor definierten Schwellwert, so ist dies ein Indiz dafür, dass es sich um ein RFID-System handelt, da die Mittenfrequenzen (fc) von RFID-Systemen gemäß des zweiten Kanalplanes auf einer Kanalgrenze des ersten Kanalplanes liegen.

Durch Hinzufügen mehrerer Messfrequenzen (fm) und Vergleichen der einzelnen Pegel kann dieses Verfahren noch weiter verbessert werden. Werden mehrere Messfrequenzen (fm) verwendet, so können die Abstände von der Mittenfrequenz (fc) unterschiedlich sein.

In einer anderen vorteilhaften Ausführungsform kann die Ermittlung des Belegt-Status eines Kanales auch über eine einfache sukzessive Integralbildung erfolgen, bei der die Pegel zwischen zwei definierten Frequenzgrenzen aufsummiert werden. Wird der Frequenzbereich für die Integralbildung (Integralbereich) beispielsweise auf ein Viertel der Kanalbandbreite festgelegt, kann die RFID-Schreib-/Lesestation durch Vergleichen der vier sukzessiv ermittelten Integrationsergebnisse auf den Belegt-Status eines Kanales schließen.

Im Folgenden werden Kriterien beschrieben, wie eine RFID-Schreib-/Lesestation durch eine sukzessive Integralbildung über drei Integralbereiche den Belegt-Zustand eines Kanales in einem ersten Kanalplan ermitteln kann.

Ermittelt eine RFID-Schreib-/Lesestation für alle drei Integralbereiche einen annähernd gleichen niedrigen Wert, der unterhalb eines zuvor definierten Schwellwertes liegt, so ist dies ein Indiz dafür, dass dieser Kanal frei ist.

Ermittelt eine RFID-Schreib-/Lesestation für die beiden äußeren Integralbereiche einen vergleichsweise niedrigen Wert und für den inneren Integralbereich einen vergleichsweise hohen Wert, der über einem zuvor definierten Schwellwert liegt, so ist dies ein Indiz dafür, dass dieser Kanal von einem anderen Funksystem belegt ist.

Ermittelt eine RFID-Schreib-/Lesestation für mindestens einen der beiden äußeren Integralbereiche einen vergleichsweise hohen Wert und für den inneren Integralbereich einen vergleichsweise niedrigen Wert, so ist dies ein Indiz dafür, dass es sich um ein RFID-System handelt, da die Mittenfrequenz (fc) von RFID-Systemen gemäß des zweiten Kanalplanes auf einer Kanalgrenze des ersten Kanalplanes liegt.

Ermittelt eine RFID-Schreib-/Lesestation für den mittleren Integralbereich einen vergleichsweise hohen Wert, der über einem definierten Schwellwert liegt und für mindestens einen der beiden äußeren Integralbereiche einen vergleichsweise hohen Wert, so ist dies ein Indiz dafür, dass dieser Kanal zwar bereits von mindestens einem anderen RFID-System verwendet wird, aber durch ein anderes Funksystem, welches mit dem ersten Kanalplan arbeitet, überlagert ist und somit von der RFID-Schreib-/Lesestation nicht verwendet werden darf.

Dabei ist dieses Verfahren nicht auf drei Integralbereiche festgelegt und kann beispielsweise auch mit vier oder einer beliebigen höheren Anzahl an Integralbereichen ausgeführt werden, wobei dann jeweils andere Entscheidungskriterien gelten. In der Zeichnung zeigen:
- Fig. 1: einen ersten und zweiten Kanalplan;
- Fig.2: ein geändertes Ausführungsbeispiel eines Kanalplanes;
- Fig. 3: ein geändertes Ausführungsbeispiel eines Kanalplanes;
- Fig. 4: ein geändertes Ausführungsbeispiel eines Kanalplanes;
- Fig. 5: die Ermittlung eines Belegt-Status;
- Fig. 6: eine Aufteilung eines Kanales in fünf Integrationsbereiche.

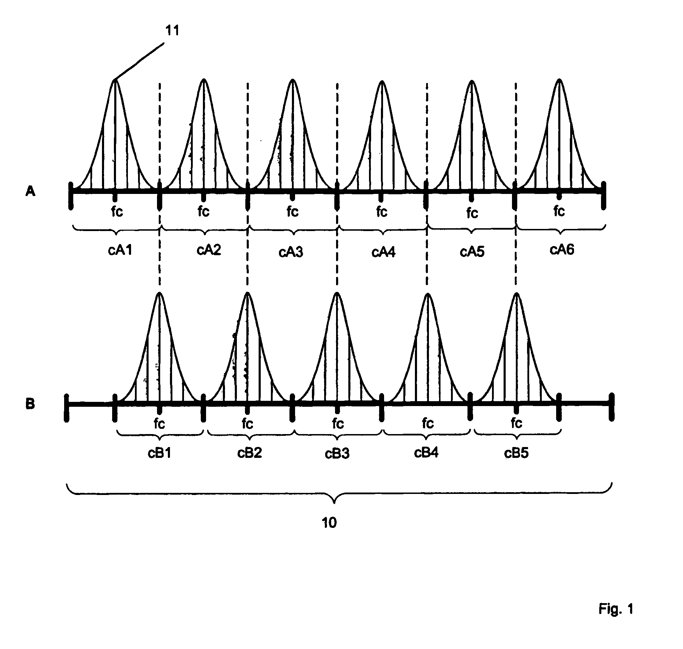

Fig. 1 zeigt beispielhaft einen ersten Kanalplan A und einen zweiten Kanalplan B, die beide in demselben Frequenzband 10 liegen. Kanalplan A weist dabei beispielhaft die sechs Kanäle cA1, cA2, cA3, cA4, cA5 und cA6 auf. Kanalplan B weist die fünf Kanäle cB1, cB2, cB3, cB4 und cB5 auf. Dabei haben die Kanäle von Kanalplan A und Kanalplan B in diesem Beispiel jeweils dieselbe Kanalbandbreite. Die Kanalbandbreiten von Kanalplan A und Kanalplan B können aber auch unterschiedlich sein.

Fig. 1 stellt in jedem Kanal beispielhaft ein Frequenzspektrum 11 dar, welches jeweils bei der Mittenfrequenz fc ein Maximum aufweist. Dabei sind die Kanäle cB1 bis cB5 von Kanalplan B jeweils so angelegt, dass ihre Mittenfrequenzen fc auf Frequenzen liegen, die die Kanalgrenzen zwischen den Kanälen cA1 bis cA6 von Kanalplan A definieren. Die Mittenfrequenz fc von Kanalplan B liegt also an Frequenzen, an denen das Frequenzspektrum eines Kanales von Kanalplan A jeweils sein Minimum hat.

Ein RFID-System könnte beispielsweise den Kanalplan B verwenden, womit ihm fünf Kanäle zur Verfügung stehen würden. Ein Funksystem könnte beispielsweise den Kanalplan A verwenden, womit dem Funksystem sechs Kanäle zur Verfügung stehen würden.

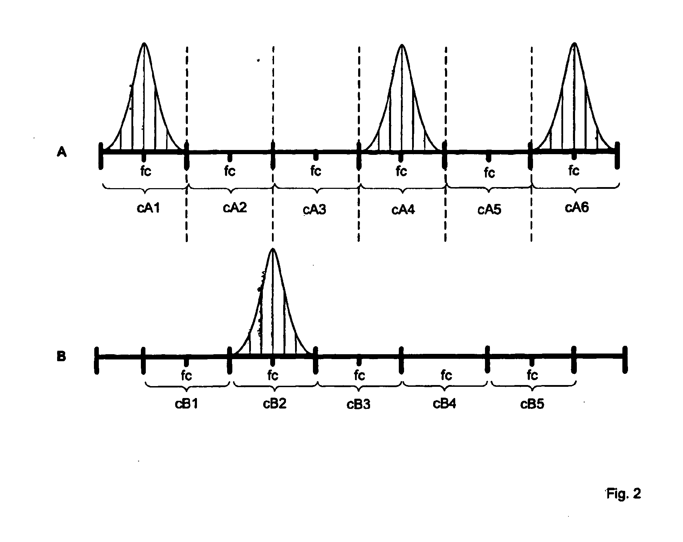

In Fig. 2 sind drei Funksender aktiv, die nach Kanalplan A arbeiten. Diese drei Sender belegen die Kanäle cA1, cA4 und cA6. In Kanalplan B ist ein RFID-System auf Kanal cB2 aktiv. Da die Kanäle cA2 und cA3 nicht belegt sind, kollidiert der aktive Kanal cB2 mit keinem Funksystem, welches nach Kanalplan A arbeitet. Gleichzeitig ist das RFID-System auf Kanal cB2 für ein weiteres RFID-System eindeutig identifizierbar, da sein Sendefrequenzspektrum in das Kanalschema von Kanalplan B, nicht aber in das Kanalschema von Kanalplan A passt, weil die Mittenfrequenz fc auf der Kanalgrenze zwischen den Kanälen cA2 und cA3 von Kanalplan A liegt, an der die Kanäle von Kanalplan A typischerweise ein Minimum aufweisen.

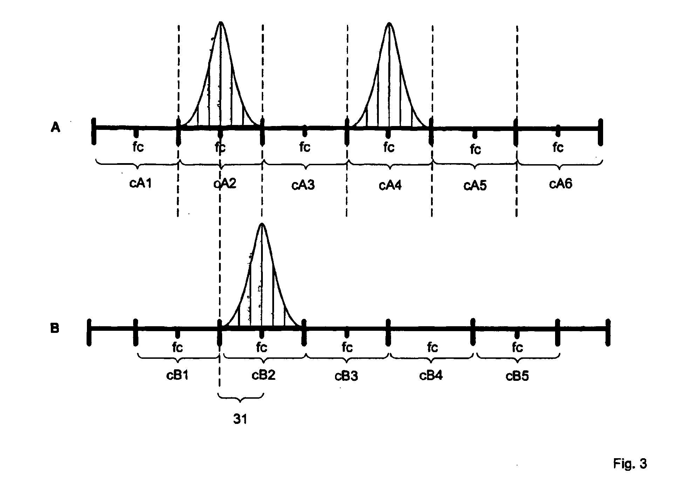

In Fig. 3 ist ein Beispiel dargestellt, bei dem die Kanäle cA2 und cA4 aktiv sind. Ferner ist Kanal cB2 als aktiv dargestellt. Dieses Szenario zeigt, dass sich die Signale der Kanäle cA2 und cB2 im Bereich 31 überlappen würden. Ein RFID-System darf den Kanal cB2 nicht verwenden, wenn die ermittelten Pegel des Systems im Kanal cA2 höher als definierte Schwellwerte sind.

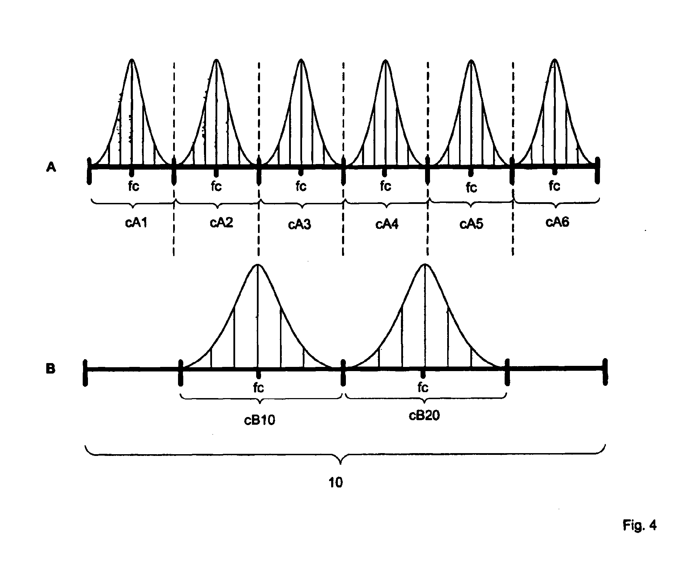

Fig. 4 zeigt beispielhaft einen ersten Kanalplan A und einen zweiten Kanalplan B, die beide in demselben Frequenzband 10 liegen, aber eine unterschiedliche Kanalbandbreite aufweisen, wobei die Kanalbandbreite von Kanalplan B das Doppelte von Kanalplan A aufweist. Die Mittenfrequenzen der Kanäle cB10 und cB20 sind erfindungsgemäß auch bei diesen Kanalplänen so angelegt, dass sie jeweils auf einer Kanalgrenze von Kanalplan A liegen und somit wieder eine einfache Unterscheidung ermöglicht wird, ob ein Funksystem gemäß Kanalplan A oder ein RFID-System gemäß Kanalplan B aktiv ist.

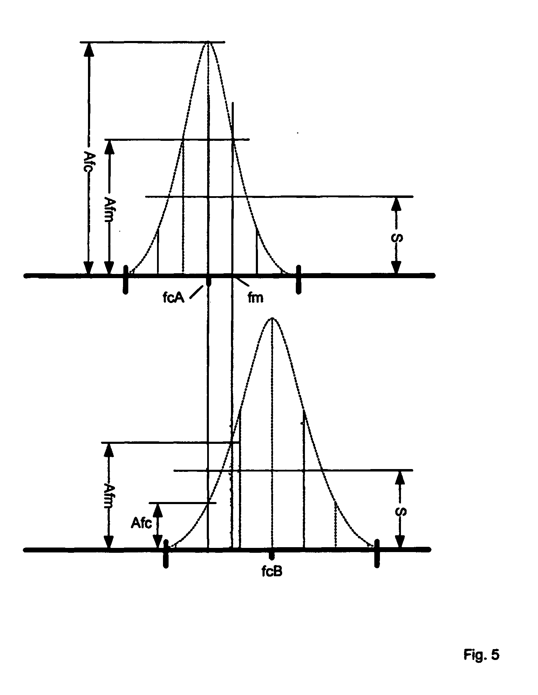

Fig. 5 stellt im oberen Teil beispielhaft dar, wie durch Messen und Vergleichen der Pegel der Belegt-Status eines Kanales ermittelt werden kann, wobei im oberen Teil ein Funksystem, welches nach einem ersten Kanalplan A arbeitet und im unteren Teil ein RFID-System, welches nach einem zweiten Kanalplan B arbeitet, dargestellt ist. Zur Ermittlung belegter Kanäle wird in diesem Beispiel zunächst der Pegel Afc im Bereich der Mittenfrequenz fcA eines Kanales nach Kanalplan A gemessen und mit dem Pegel Afm bei der Messfrequenz fm verglichen. Die Messfrequenz fm wird dabei vorteilhaft so gewählt, dass sie in einem Bereich zwischen den Mittenfrequenzen fc des ersten Kanalplanes A und des zweiten Kanalplanes B liegt. Weist der Pegel Afm dabei einen geringeren Wert als der Pegel Afc auf und übersteigen die Pegel Afm und/oder Afc einen definierten Schwellwert S, ist der entsprechende Kanal durch ein Funksystem belegt, welches den ersten Kanalplan A verwendet.

Wäre der Pegel Afc kleiner als der Pegel Afm, wie dies beispielhaft im unteren Teil der Fig. 5 dargestellt ist, wäre dies ein Indiz dafür, dass der Kanal zwar belegt ist, aber durch ein RFID-System, welches nach einem zweiten Kanalplan B arbeitet, belegt wurde. Der höhere Pegel Afm in Relation zum Pegel Afc weist zumindest darauf hin, dass dieser Kanal durch ein RFID-System belegt ist, dessen Mittenfrequenz fc nicht bei der Frequenz fcA liegt.

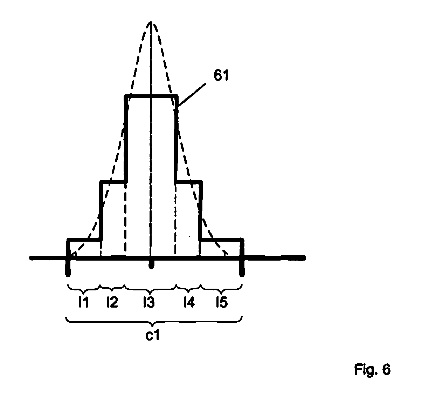

Fig. 6 zeigt beispielhaft, wie ein Kanal c1 in fünf Integrationsbereiche I1, I2, I3, I4 und I5 unterteilt werden kann. Dabei zeigt die Linie 61 exemplarisch die Werte der Integrationsergebnisse der fünf Integrationsbereiche. Die so gebildeten Integrationsergebnisse können einfach verglichen werden und dienen als Entscheidungsgrundlage dafür, ob ein Kanal als belegt oder frei gewertet wird.

## Patentansprüche

1. Verfahren zum gleichzeitigen Betrieb mindestens eines ersten Funksystems und mindestens eines RFID-Systems innerhalb eines Frequenzbandes (10), bei dem das Frequenzband (10) durch einen Kanalplan in eine Mehrzahl von Kanälen unterteilt ist und bei dem ein erstes Funksystem einen ersten Kanalplan (A) nutzt und ein RFID-System einen davon abweichenden zweiten Kanalplan (B),
**dadurch gekennzeichnet, dass** sich die Kanäle des ersten Kanalplanes (A) und zweiten Kanalplanes (B) überschneiden und die Mittenfrequenzen (fc) des zweiten Kanalplanes (B) jeweils so definiert sind, dass sie jeweils auf einer Kanalgrenze des ersten Kanalplanes (A) liegen und ein RFID-System die Belegt-Zustände von Kanälen des ersten Kanalplanes (A) und/oder des zweiten Kanalplanes (B) analysiert.

2. Verfahren nach Anspruch 1, **dadurch gekennzeichnet, dass** ein RFID-System Pegel innerhalb des Frequenzbandes (10) erfasst und durch relatives Vergleichen von erfassten Pegeln untereinander und Vergleichen mit definierten Schwellwerten ermittelt, ob Kanäle des ersten Kanalplanes (A) und/oder des zweiten Kanalplanes (B) belegt sind.

3. Verfahren nach Anspruch 1, **dadurch gekennzeichnet, dass** ein RFID-System Pegel im Bereich der Mittenfrequenz (fc) und an mindestens einer Messfrequenz (fm) erfasst und anhand der erfassten Pegel ermittelt, ob Kanäle des ersten Kanalplanes und/oder des zweiten Kanalplanes belegt sind.

4. Verfahren nach Anspruch 1, **dadurch gekennzeichnet, dass** ein RFID-System Pegel innerhalb definierter Integralbereiche erfasst und durch Vergleichen der erfassten Pegel untereinander und mit definierten Schwellwerten den Belegt-Zustand eines Kanales ermittelt.

## Claims

1. Method for simultaneously operating at least one first radio system and at least one RFID system within a frequency band (10), in which the frequency band (10) is subdivided by a channel plan into a plurality of channels and in which a first radio system uses a first channel plan (A) and an RFID system uses a second channel plan (B) differing therefrom,
**characterised in that** the channels of the first channel plan (A) and of the second channel plan (B) overlap and the centre frequencies (fc) of the second channel plan (B) are each defined such that they each lie on a channel boundary of the first channel plan (A) and an RFID system analyses the occupied states of channels of the first channel plan (A) and/or of the second channel plan (B).

2. Method according to Claim 1, **characterised in that** an RFID system detects levels within the frequency band (10) and by relative comparison of detected levels with one another and comparison with defined threshold values determines whether channels of the first channel plan (A) and/or of the second channel plan (B) are occupied.

3. Method according to Claim 1, **characterised in that** an RFID system detects levels in the region of the centre frequency (fc) and at at least one measuring frequency (fm) and on the basis of the detected levels determines whether channels of the first channel plan and/or of the second channel plan are occupied.

4. Method according to Claim 1, **characterised in that** an RFID system detects levels within defined integral ranges and by comparison of the detected levels with one another and with defined threshold values determines the occupied state of a channel.

## Revendications

1. Procédé pour l'exploitation simultanée d'au moins un premier système radio et au moins un système RFID dans une bande de fréquence (10), dans lequel la bande de fréquence (10) est divisée selon un plan de canaux en une pluralité de canaux et dans lequel un premier système radio exploite un premier plan de canaux (A) et un système RFID un deuxième plan de canaux (B) qui est différent de celui-ci,
**caractérisé en ce que** les canaux du premier plan de canaux (A) et du deuxième plan de canaux (B) se chevauchent et les fréquences médianes (fc) du deuxième plan de canaux (B) sont dans chaque cas définies de sorte qu'elles soient situées dans chaque cas sur un bord de canal du premier plan de canaux (A) et le système RFID analyse l'état d'occupation des canaux du premier plan de canaux (A) et/ou du deuxième plan de canaux (B).

2. Procédé selon la revendication 1, **caractérisé en ce que** le système RFID mesure les niveaux à l'intérieur de la bande de fréquences (10) et, grâce à des comparaisons relatives des niveaux obtenus l'un par rapport à l'autre et la comparaison avec des valeurs seuils définies, indique si les canaux du premier plan de canaux (A) et/ou du deuxième plan de canaux (B) sont occupés.

3. Procédé selon la revendication 1, **caractérisé en ce qu'**un système RFID détermine les niveaux dans le domaine de la fréquence médiane (fc) et à au moins une fréquence de mesure (fin) et, sur la base des niveaux obtenus, indique si les canaux du premier plan de canaux et/ou du deuxième plan de canaux sont occupés.

4. Procédé selon la revendication 1, **caractérisé en ce que** le système RFID mesure les niveaux dans un domaine intégré défini et, grâce à une comparaison des niveaux obtenus l'un avec l'autre et, avec des valeurs de seuil définies, indique l'état d'occupation d'un canal.
